# EUROPEAN PATENT APPLICATION

(11) **EP 4 691 659 A1**
(43) Date of publication of application: **11.02.2026**
(21) Application number: 24780537.7
(22) Date of filing: 27.03.2024
(51) Int. Cl.: B21B 1/26, B21B 45/08, B23C 3/14, B23K 7/06, B23P 17/00, B23P 23/04, C22C 38/00, C22C 38/16

(54) **HOT-ROLLING EQUIPMENT AND HOT-ROLLING METHOD**

(30) Priority: 29.03.2023 JP 2023054364
(71) Applicant: NIPPON STEEL CORPORATION, Chiyoda-ku Tokyo 100-8071 (JP)
(72) Inventor: AOKI, Toshikazu, Tokyo 100-8071 (JP); NIITANI, Hiroshi, Tokyo 100-8071 (JP); KIHARA, Yuki, Tokyo 100-8071 (JP)
(74) Representative: Vossius & Partner Patentanwälte Rechtsanwälte mbB
(86) International application number: PCT/JP2024/012447
(87) International publication number: WO 2024/204436

(57) **Abstract**

Hot rolling equipment for hot rolling a steel material containing Cu, the hot rolling equipment including: a heating furnace that heats the steel material to a predetermined temperature after casting; a rolling apparatus that rolls the steel material that has been heated in the heating furnace; a removal apparatus that is provided downstream of the heating furnace and upstream of the rolling apparatus in a transport direction of the steel material and that removes, from the steel material that has been heated in the heating furnace, a target region including a Cu-rich layer that is present at a surface side of the steel material and in which a concentration of Cu components is higher than it is in a base material of the steel material; and a post-removal descaling apparatus that is provided downstream of the removal apparatus and upstream of the rolling apparatus in the transport direction of the steel material and that descales the steel material using cooling water.

## Description

### TECHNICAL FIELD

The present disclosure relates to hot rolling equipment and a hot rolling method.

### BACKGROUND ART

International Publication No. 2008/146891 describes a method of trimming the surface layer portion of a hot slab, in which a part or all of the surface layer portion of a steel material (e.g., a slab) after it is continuously cast is cut to a depth of 1 mm or more from the surface of the steel material using a milling-type surface layer cutting apparatus configured by an electric rotary cutting tool with numerous cutting blades.

Furthermore, JP-A No. H6-198304 describes a hot rolling method in which the surface layer of a steel material (e.g., a slab) after it is continuously cast is removed by a scarfing apparatus or a grinding apparatus and thereafter the steel material is hot rolled.

### SUMMARY

### Technical Problem

In recent years, iron sources other than iron ores have come to be utilized in order to reduce carbon dioxide emissions in the steel manufacturing process. For example, increasing the use ratio of scrap iron as an iron source is being considered.

However, when scrap iron is utilized as an iron source, surface defects caused by copper (Cu) included in the scrap iron may occur in the steel manufacturing stage. For example, in the hot rolling process, hot-shortness cracks caused by Cu concentrating in the surface layer of the steel material may occur, reducing the surface quality of the steel material. For this reason, it is difficult to increase the use ratio of scrap iron including Cu as an iron source, making it difficult to realize an environmentally friendly steel manufacturing process.

In the technique described in International Publication No. 2008/146891, the surface layer of the steel material after it is continuously cast is removed by a milling-type surface layer cutting apparatus, so there is room for improvement in order to inhibit hot-shortness cracks.

On the other hand, in the technique described in JP-A No. H6-198304, the steel material that has been continuously cast is heated by a heating furnace, and thereafter the surface layer of the steel material is removed by a scarfing apparatus or a grinding apparatus. Because of this, a Cu-rich layer that was formed in the surface layer of the steel when the steel was heated in the heating furnace is removed by the scarfing apparatus or the like. Consequently, hot-shortness cracks in the surface of the steel material are inhibited.

However, the technique described in JP-A No. H6-198304 does not consider the effect that the removal of the surface layer of the steel material by the scarfing apparatus or the like has on the subsequent rolling of the steel material, and there is room for improvement in terms of the rolling quality of the steel material.

Thus, it is an object of the present disclosure to provide a hot rolling method and hot rolling equipment that can inhibit hot-shortness cracks in a steel material and inhibit a reduction in the rolling quality of a steel material.

### Solution to Problem

Hot rolling equipment pertaining to a first aspect is hot rolling equipment for hot rolling a steel material containing Cu, the hot rolling equipment including: a heating furnace that heats the steel material to a predetermined temperature after casting; a rolling apparatus that rolls the steel material that has been heated in the heating furnace; a removal apparatus that is provided downstream of the heating furnace and upstream of the rolling apparatus in a transport direction of the steel material and that removes, from the steel material that has been heated in the heating furnace, a target region including a Cu-rich layer that is present at a surface side of the steel material and in which a concentration of Cu components is higher than a concentration of Cu components in a base material of the steel material; and a post-removal descaling apparatus that is provided downstream of the removal apparatus and upstream of the rolling apparatus in the transport direction of the steel material and that descales the steel material using cooling water.

Hot rolling equipment pertaining to a second aspect is the hot rolling equipment pertaining to the first aspect, wherein the post-removal descaling apparatus cools the steel material such that a temperature at a surface of the steel material becomes less than 1100°C.

Hot rolling equipment pertaining to a third aspect is the hot rolling equipment pertaining to the first aspect or the second aspect, wherein the hot rolling equipment includes a width reduction apparatus that is provided downstream of the heating furnace and upstream of the removal apparatus in the transport direction of the steel material and that reduces the steel material in a width direction of the steel material.

Hot rolling equipment pertaining to a fourth aspect is the hot rolling equipment pertaining to any one of the first aspect to the third aspect, wherein the hot rolling equipment includes a pre-removal descaling apparatus that is provided downstream of the heating furnace and upstream of the removal apparatus in the transport direction of the steel material and that descales the steel material using cooling water.

Hot rolling equipment pertaining to a fifth aspect is the hot rolling equipment pertaining to any one of the first aspect to the fourth aspect, wherein the rolling apparatus is a rough rolling apparatus that rough rolls the steel material or a finish rolling apparatus that finish rolls the steel material.

Hot rolling equipment pertaining to a sixth aspect is the hot rolling equipment pertaining to any one of the first aspect to the fifth aspect, wherein the target region is a region of 2 mm or less from a surface of the steel material in a thickness direction of the steel material.

Hot rolling equipment pertaining to a seventh aspect is the hot rolling equipment pertaining to any one of the second aspect to the sixth aspect, wherein the removal apparatus removes the target region from the steel material by scarfing or removes the target region from the steel material by mechanical removal.

Hot rolling equipment pertaining to an eighth aspect is the hot rolling equipment pertaining to any one of the first aspect to the seventh aspect, wherein the heating furnace is provided separately from a production line of a casting machine that casts the steel material.

Hot rolling equipment pertaining to a ninth aspect is the hot rolling equipment pertaining to any one of the first aspect to the seventh aspect, wherein the heating furnace is provided on a production line of a casting machine that casts the steel material.

A hot rolling method pertaining to a tenth aspect is a hot rolling method for hot rolling a steel material containing Cu, the hot rolling method including: a heating process that heats the steel material to a predetermined temperature after casting; a removal process that performs a treatment on the steel material that has been heated in the heating process, the treatment removing a target region including a Cu-rich layer that is present at a surface side of the steel material and in which a concentration of Cu components is higher than a concentration of Cu components in a base material of the steel material; a post-removal descaling process that descales the steel material using cooling water after the removal process; and a rolling process that rolls the steel material after the post-removal descaling process.

A hot rolling method pertaining to an eleventh aspect is the hot rolling method pertaining to the tenth aspect, wherein in the post-removal descaling process, the steel material is cooled such that a temperature at a surface of the steel material becomes less than 1100 °C.

A hot rolling method pertaining to a twelfth aspect is the hot rolling method pertaining to the tenth aspect or the eleventh aspect, further including a width reducing process that reduces the steel material in a width direction of the steel material after the heating process and before the removal process.

A hot rolling method pertaining to a thirteenth aspect is the hot rolling method pertaining to any one of the tenth aspect to the twelfth aspect, further including a pre-removal descaling process that descales the steel material using cooling water after the heating process and before the removal process.

A hot rolling method pertaining to a fourteenth aspect is the hot rolling method pertaining to any one of the tenth aspect to the thirteenth aspect, wherein, in the rolling process, rough rolling or finish rolling is performed on the steel material.

A hot rolling method pertaining to a fifteenth aspect is the hot rolling method pertaining to any one of the tenth aspect to the fourteenth aspect, wherein the target region is a region of 2 mm or less from a surface of the steel material in a thickness direction of the steel material.

A hot rolling method pertaining to a sixteenth aspect is the hot rolling method pertaining to any one of the tenth aspect to the fifteenth aspect, wherein, in the removal process, the target region is removed from the steel material by scarfing or the target region is removed from the steel material by mechanical removal.

A hot rolling method pertaining to a seventeenth aspect is the hot rolling method pertaining to any one of the tenth aspect to the sixteenth aspect, wherein the steel material contains the Cu at 0.15 mass% or more.

### Advantageous Effects of Invention

As described above, according to the present disclosure, there are provided a hot rolling method and hot rolling equipment that can inhibit hot-shortness cracks in a steel material and inhibit a reduction in the rolling quality of a steel material.

### BRIEF DESCRIPTION OF DRAWINGS

FIG. 1 is a schematic diagram showing an example of the schematic configuration of hot rolling equipment pertaining to a first embodiment of the disclosure.
FIG. 2 is a schematic diagram showing an example of the thermal history of a steel material in the hot rolling equipment pertaining to the first embodiment of the disclosure.
FIG. 3 is a cross-sectional diagram showing a steel material that is scarfed by a scarfing apparatus pertaining to the first embodiment of the disclosure.
FIG. 4 is a schematic diagram showing an example of the schematic configuration of the scarfing apparatus pertaining to the first embodiment of the disclosure.
FIG. 5 is a schematic diagram showing an example of the schematic configuration of a target region pertaining to the first embodiment of the disclosure.
FIG. 6 is a flowchart showing an example of a hot rolling process pertaining to the first embodiment of the disclosure.
FIG. 7 is a schematic diagram showing an example of the schematic configuration of a hot rolling apparatus pertaining to a first example modification.
FIG. 8 is a schematic diagram showing an example of the schematic configuration of a hot rolling apparatus pertaining to a second example modification.
FIG. 9 is a schematic diagram showing an example of the thermal history of a steel material in the hot rolling equipment pertaining to the second example modification.
FIG. 10 is a schematic diagram showing an example of the schematic configuration of hot rolling equipment pertaining to a second embodiment of the disclosure.
FIG. 11 is a schematic diagram showing an example of the schematic configuration of a cutting apparatus pertaining to the second embodiment of the disclosure.
FIG. 12 is a schematic diagram showing an example of the schematic configuration of hot rolling equipment pertaining to a third embodiment of the disclosure.
FIG. 13 is a schematic diagram showing an example of the thermal history of a steel material in the hot rolling equipment pertaining to the third embodiment of the disclosure.
FIG. 14 is a schematic diagram showing an example of the schematic configuration of a hot rolling apparatus pertaining to a second example modification.
FIG. 15 is a schematic diagram showing an example of the thermal history of a steel material in the hot rolling equipment pertaining to the second example modification.
FIG. 16 is a graph showing the relationship between the percentage of the number of Cu-rich areas and scarfing depth pertaining to Examples of the disclosure.

### DETAILED DESCRIPTION

Preferred embodiments of the disclosure will be described in detail below with reference to the attached drawings. It will be noted that redundant description will be omitted by assigning identical reference signs to constituent elements having substantially identical functional configurations in the specification and the drawings. Furthermore, unless otherwise specified, each constituent element is not limited to one and may be plural.

### <First Embodiment>

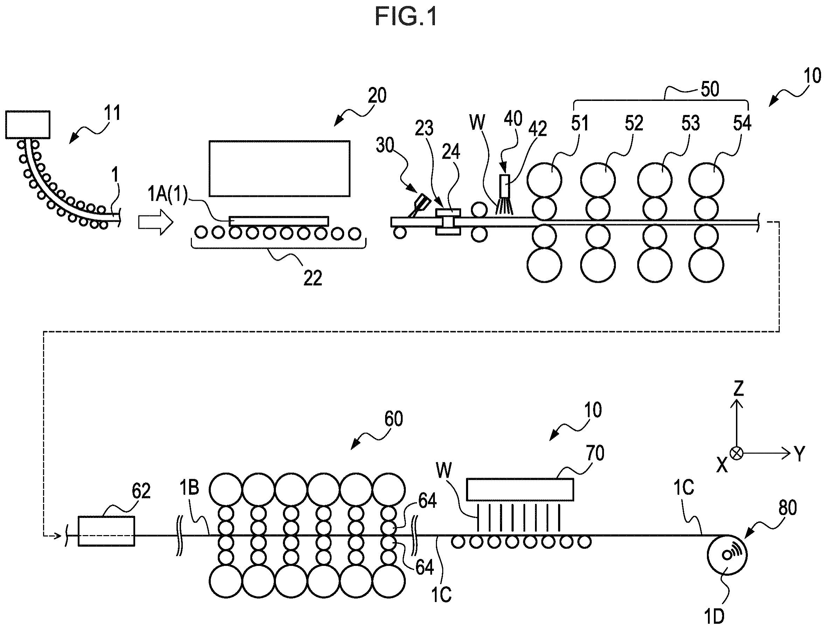

First, the schematic configuration of hot rolling equipment 10 pertaining to a first embodiment of the disclosure will be described with reference to FIG. 1. FIG. 1 is a diagram showing the schematic configuration of the hot rolling equipment 10.

As shown in FIG. 1 as an example, the hot rolling equipment 10 is equipment for hot rolling a steel material 1. The hot rolling equipment 10 is, as an example, provided separately from a production line of a continuous casting machine 11 that continuously casts the steel material 1. The hot rolling equipment 10 includes a heating furnace 20, a scarfing apparatus 30, a width reduction apparatus 23, a descaling apparatus 40, a rough rolling apparatus 50, and a finish rolling apparatus 60. It will be noted that the steel material 1 is not limited to being continuously cast and may also be individually cast.

The heating furnace 20 heats to a predetermined temperature the steel material 1 (e.g., a slab 1A), which is obtained by cutting to a predetermined length the steel material 1 discharged from the continuous casting machine 11. The "predetermined temperature" here is, for example, 1100 °C or higher. The slab 1A is heated by the heating furnace 20 while being transported by transport rolls 22. Although the slab 1A is mentioned as an example of the steel material 1 here, it is merely an example, and the steel material 1 may also be a billet.

The steel material 1 is a steel material containing Cu and is, for example, a steel material containing Cu at 0.15 wt% (mass%) or more and particularly containing Cu at 0.25 wt% or more. It will be noted that the content of Cu here means the average content of Cu in the base material of the steel material 1 described later or the average content of Cu in the molten steel that becomes the steel material 1. Furthermore, the content of Cu in the steel material 1 is, for example, 5.6 wt% or less.

The scarfing apparatus 30 removes the surface part (surface layer) of the slab 1A by scarfing the slab 1A discharged from the heating furnace 20. Details about the scarfing apparatus 30 will be described further below. The scarfing apparatus 30 is located downstream of the heating furnace 20 in the transport direction of the slab 1A. Furthermore, the scarfing apparatus 30 is located upstream of the width reduction apparatus 23 and the descaling apparatus 40 in the transport direction of the slab 1A. More specifically, the scarfing apparatus 30 is located downstream of the heating furnace 20 and upstream of the width reduction apparatus 23 in the transport direction of the slab 1A. The width reduction apparatus 23 is an apparatus that adjusts the width of the slab 1A by reducing (pressing), in the width direction of the slab 1A, the slab 1A that has been heated in the heating furnace 20. The width reduction apparatus 23 has a pair of vertical rolls 24 disposed on both width direction sides of the slab 1A. The pair of vertical rolls 24 are disposed along the thickness direction of the slab 1A. The pair of vertical rolls 24 reduce (press) the surfaces (side end faces) of the slab 1A on both sides in the width direction toward the width direction center of the slab 1A to thereby adjust the width of the slab 1A. It will be noted that in this specification, "removal" is a concept that is not limited to complete removal and also includes cases where there is insufficient removal within a generally acceptable range in the technical field to which the disclosure belongs and to an extent that does not go against the spirit of the disclosure. It will be noted that the scarfing apparatus 30 is an example of a removal apparatus.

The descaling apparatus 40 removes scale (i.e., an oxide film) formed on the surfaces of the slab 1A on both sides in the thickness direction and the surfaces (side end faces) of the slab 1A on both sides in the width direction before rough rolling by the rough rolling apparatus 50. The descaling apparatus 40 removes scale from the surfaces of the slab 1A by spraying a fluid (e.g., cooling water) from a nozzle 42 onto the surfaces of the slab 1A. Furthermore, the descaling apparatus 40 cools the slab 1A by spraying the fluid from the nozzle 42 onto the slab 1A. Because of this, scale formation is inhibited. The descaling apparatus 40 sprays cooling water W, which is for example supplied from a cooling water tank (not shown in the drawings) and pressurized to a predetermined hydraulic pressure using a pump (not shown in the drawings), from the nozzle 42 onto the slab 1A. Scale on the slab 1A is removed by the descaling apparatus 40, and the temperature at the surfaces of the slab 1A is cooled to less than 1100 °C by heat removal by the cooling water W. Here, the temperature at the surfaces of the slab 1A (e.g., the width direction surfaces of the slab 1A) after scale has been removed by the descaling apparatus 40 is measured by an infrared thermometer. It will be noted that the descaling apparatus 40 is an example of a post-removal descaling apparatus.

The rough rolling apparatus 50 rough rolls (hot rough rolls) the slab 1A to thin the slab 1A to a predetermined thickness. Specifically, the rough rolling apparatus 50 reduces the slab 1A, which has been reduced in the width direction by the width reduction apparatus 23 (the vertical rolls 24), from upper and lower directions to form a rough bar 1B. In the example shown in FIG. 1, the rough rolling apparatus 50 includes four rolling mills 51, 52, 53, 54. Each of the rolling mills 51 to 54 has a plurality of rolls that sandwich the slab 1A from both sides in the thickness direction. The rough rolling apparatus 50 uses the rolling mills 51 to 54 to continuously roll the slab 1A. In the rough rolling apparatus 50, the slab 1A is thinned to a thickness of about 25 to 50 mm for example and formed into the rough bar 1B. It will be noted that although an example where the rough rolling apparatus 50 includes the four rolling mills 51 to 54 is described here, this is merely an example, and the rough rolling apparatus 50 may include two rolling mills for example. In this case, in the rough rolling apparatus 50, reciprocating rolling is performed between the two rolling mills. It will be noted that the rough rolling apparatus 50 is an example of a rolling apparatus.

The finish rolling apparatus 60 further hot finish rolls the rough bar 1B to a predetermined thickness. Specifically, the finish rolling apparatus 60 hot finish rolls the rough bar 1B, which has been reheated by a rough bar heating apparatus 62, to a thickness of about a few mm (e.g., 1 to 2 mm). The finish rolling apparatus 60 has a plurality of finishing roll 64 groups across 6 to 7 stands. Each finishing roll 64 group has a plurality of rolling rolls arranged in a vertically straight line. The finish rolling apparatus 60 gradually reduces the rough bar 1B by passing the rough bar 1B through gaps in the plural finishing roll 64 groups. A steel strip 1C, obtained as a result of the rough bar 1B being finish rolled to a predetermined thickness by the finish rolling apparatus 60, is fed to a cooling apparatus 70. It will be noted that although an example where the finish rolling apparatus 60 has 6 to 7 stands of finishing roll 64 groups is described here, this is merely an example, and the finish rolling apparatus 60 may, for example, have five stands of finishing roll 64 groups. It will be noted that the finish rolling apparatus 60 is an example of a rolling apparatus.

The cooling apparatus 70 cools the finished steel strip 1C with cooling water W. The cooling apparatus 70 is, for example, a pipe laminar nozzle type cooling apparatus. 1C cooled by the cooling apparatus 70 is coiled into a coil by a coiling apparatus 80 and transported as a hot-rolled coil 1D from the hot rolling equipment 10 to the next process.

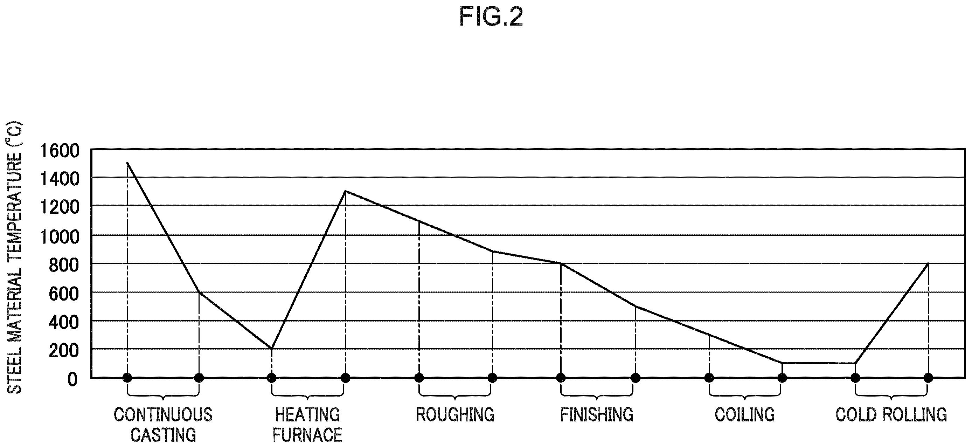

FIG. 2 shows an example of the thermal history of the steel material 1 in a series of processes of continuous casting, hot rolling, and cold rolling. As shown in FIG. 2, at the start of continuous casting, the temperature of the steel material 1 is about 1500 °C, so scale forms on the surface of the steel material 1. This is because when the steel material 1 reaches 1100 °C or higher, a reaction of 2Fe+O₂ = 2FeO mainly proceeds on the surface of the steel material 1 such that iron oxide (i.e., FeO) is formed on the surface of the steel material 1 and becomes scale. In this temperature range, if the base material of the steel material 1 includes a relatively large amount of Cu (e.g., if the average concentration of Cu components in the base material is 0.15 wt % (mass%) or more), the iron oxide formed on the surface of the steel material 1 also includes Cu. Since the Cu in the iron oxide is present in a liquid-phase state without being oxidized, it infiltrates into the surface layer of the base metal part of the steel material 1 from the iron oxide. The Cu that has infiltrated into the surface layer of the base metal part of the steel material 1 from the iron oxide mainly deposits and concentrates at grain boundaries in the surface layer. In this way, a region (hereinafter called a "Cu-rich layer") in which the concentration of Cu components is higher than the average concentration of Cu components in the base material of the steel material 1 is formed in the surface layer (surface side) of the base metal part of the steel material 1 (i.e., a Cu concentration phenomenon occurs).

It will be noted that "Cu-rich layer" means a region where the concentration of Cu components is higher than the average concentration of Cu components in the base material of the steel material in the base metal part of the steel material that is unoxidized when scale associated with oxidation is formed on the surface of the steel material. In other words, "Cu-rich layer" means a region from the boundary between scale formed on the surface of the steel material and the base metal part of the steel material, i.e., from the surface of the base metal part of the steel material that is not oxidized, toward the thickness direction center of the steel material until Cu components concentrated at the grain boundaries are no longer observed. The "region where Cu components concentrated at the grain boundaries are not observed" here means a region where the concentration of the Cu components present at the grain boundaries is equal to or less than the steel material average concentration + 1%. Furthermore, "base material of the steel material" means the part of the steel material excluding the Cu-rich layer.

When Cu is present in a liquid-phase state (e.g., at 1100 °C or higher) at the grain boundaries, the ductility of the grain boundaries decreases. For this reason, when a Cu-rich layer is formed in the steel material 1, the steel material 1 exhibits hot-shortness, and hot-shortness cracks occur in the surface of the steel material 1. Cracks occurring in the surface of the steel material 1 need to be removed because they become a quality defect. Particularly in high-grade steel materials and automotive steel sheets where importance is attached to surface quality, surface cracks in the steel material 1 need to be removed.

In conventionally known surface trimming methods, surface layer defects such as iron oxide that has formed on the surface of the slab 1A, inclusions and casting powder that have become embedded in the surface layer of the slab 1A during casting, or air bubble marks in the surface layer of the slab 1A are removed by a grinder or the like. This removal of surface layer defects is performed before the heating process (i.e., heating by the heating furnace 20) in the hot rolling process. That is, surface layer defects are removed from the slab 1A before the hot rolling process. However, in the heating process in the hot rolling process, the slab 1A is reheated to 1100 °C or higher (e.g., about 1400 °C), so scale reforms on the surface of the slab 1A. As a result, the Cu concentration phenomenon reoccurs in the slab 1A, and hot-shortness cracks also reoccur.

Thus, as a result of extensive research, the present inventors arrived at the idea of removing the Cu-rich layer in the surface of the slab 1A after the slab 1A has been heated by the heating furnace 20 in the hot rolling process. That is, in the thermal history of the steel material 1 shown in FIG. 2, once the steel material 1 cools to 1000 °C or lower in the rough rolling process after leaving the heating furnace 20, its temperature does not rise again to 1100 °C or higher. Namely, scale does not form on the steel material 1 in processes after the heating process in which the steel material 1 is heated by the heating furnace 20. Consequently, in processes after the heating process in which the steel material 1 is heated by the heating furnace 20, the Cu concentration phenomenon does not occur and hot-shortness cracks also do not occur in the steel material 1.

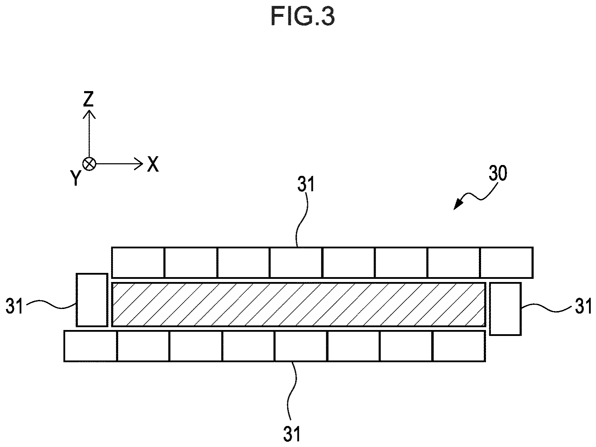

Thus, in the hot rolling equipment 10 pertaining to this embodiment, the surface layer of the slab 1A is removed by the scarfing apparatus 30 located downstream of the heating furnace 20 in the transport direction of the slab 1A. As shown in FIG. 3 as an example, the scarfing apparatus 30 has two scarfer units 31 that oppose the surfaces of the steel material 1 on both sides (top and bottom sides) in the thickness direction and two scarfer units 31 that oppose the surfaces (side end faces) of the steel material 1 on both sides (left and right sides) in the width direction. It will be noted that the four scarfer units 31 have the same configuration. For that reason, the scarfer unit 31 that opposes the surface of the steel material 1 on one side (the upper side) in the thickness direction will be described below.

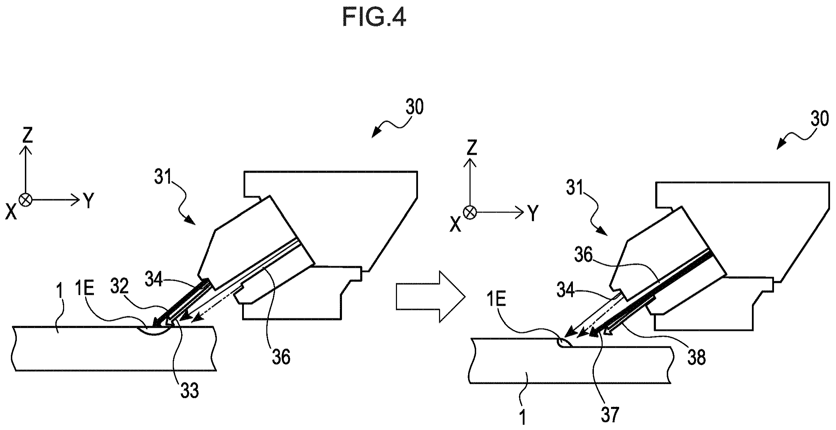

As shown in FIG. 4, the scarfing apparatus 30 has a scarfer unit 31 disposed so as to oppose the surface of the steel material 1. The scarfer unit 31 includes a preheating gas jetting unit 34 and a scarfing oxygen jetting unit 36. The preheating gas jetting unit 34 jets preheating oxygen 32 and a combustible gas 33. The scarfing oxygen jetting unit 36 jets scarfing oxygen 37. It will be noted that a shielding gas 38 comprising a combustible gas is jetted together with the scarfing oxygen 37 from the lower portion of the scarfing oxygen jetting unit 36. The steel material 1 is configured to be transported in the direction of arrow Y in FIG. 4.

It will be noted that as shown in FIG. 4, the jet flow of the scarfing oxygen 37 jetted from the scarfing oxygen jetting unit 36 is jetted more forwardly in the transport direction Y of the steel material 1 than the jet flows of the preheating oxygen 32 and the combustible gas 33 jetted from the preheating gas jetting unit 34.

In the scarfing apparatus 30, first, as shown on the left side of FIG. 4, a preheating process is performed. In the preheating process, the preheating oxygen 32 and the combustible gas 33 are jetted from the preheating gas jetting unit 34 of the scarfer unit 31 toward the surface of the steel material 1, causing the combustible gas 33 to burn. Then, a part of the surface of the steel material 1 is melted by the heat of the burning combustible gas 33, forming a reservoir 1E.

It will be noted that the length, along the transport direction Y, of the reservoir 1E formed in the surface of the steel material 1 is in the range of about 20 mm to 30 mm for example.

Next, as shown on the right side of FIG. 4, a scarfing process is performed. In the scarfing process, the scarfing oxygen 37 is jetted from the scarfing oxygen jetting unit 36 of the scarfer unit 31 toward the surface of the steel material 1, and the steel material 1 in which the reservoir 1E has been formed is transported in the transport direction Y. At this time, the shielding gas 38 is jetted together with the scarfing oxygen 37 from the scarfing oxygen jetting unit 36, and the scarfing oxygen 37 is protected by the shielding gas 38. It will be noted that the scarfing process is an example of a removal process.

Then, the jet flow of the scarfing oxygen 37 jetted from the scarfing oxygen jetting unit 36 passes through the reservoir 1E in the transported steel material 1, and an oxidation reaction between the scarfing oxygen 37 and the iron occurs with the reservoir 1E as a heat source. Heat from the oxidation reaction melts the surface of the steel material 1 and scarfs the surface of the steel material 1. That is, the surface of the steel material 1 becomes scarfed by the heat from the oxidation reaction on the rear side of the reservoir 1E in the transport direction Y. In this way, the surface layer of the slab 1A after it has been heated in the heating furnace 20 is scarfed by the scarfing apparatus 30.

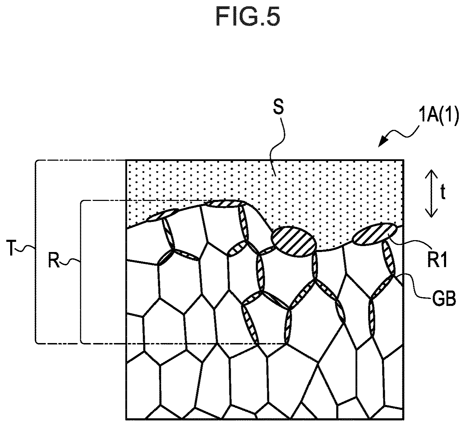

As shown in FIG. 5 as an example, the scarfing apparatus 30 removes a target region T, which is a region including a Cu-rich layer R. Here, the target region T is a range extending a predetermined distance from the surface of the slab 1A (i.e., the surface of scale S) in a thickness direction t of the slab 1A. The predetermined distance is, for example, greater than 0 mm and equal to or less than 3 mm (0 < distance ≤ 3 mm), preferably greater than 0 mm and equal to or less than 1 mm (0 < distance ≤ 1 mm), more preferably greater than 0 mm and equal to or less than 2 mm (0 < distance ≤ 2 mm), and even more preferably greater than 1 mm and equal to or less than 2 mm (1 < distance ≤ 2 mm).

The thickness of the slab 1A is about 250 mm for example. Thus, by removing a region of 1 mm or less from the surface of the slab 1A as the target region T in the thickness direction t of the slab 1A, the reduction in the thickness of the slab 1A is mitigated, so the yield of the slab 1A can be improved. Furthermore, by removing a region of 2 mm or less from the surface of the slab 1A as the target region T in the thickness direction t of the slab 1A, the yield of the slab 1A can be improved and the Cu-rich layer R can be more reliably removed.

It will be noted that FIG. 5 shows an example where the surface of the steel material 1 on one side in the thickness direction is scarfed.

Due to the target region T including the Cu-rich layer R being scarfed (removed) from the steel material 1, Cu-rich areas R1 present at grain boundaries GB are removed. As a result, hot-shortness cracks in the surface of the slab 1A are inhibited.

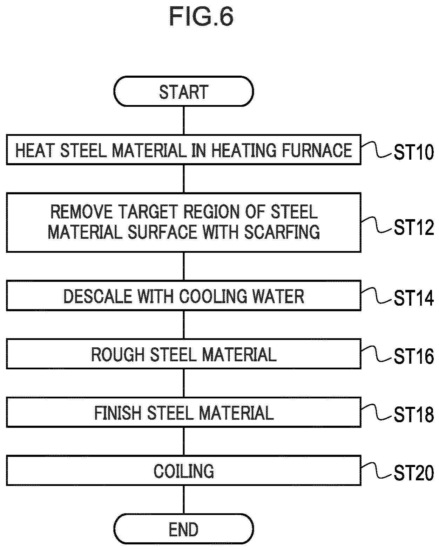

Next, a hot rolling method pertaining to the present embodiment will be described with reference to FIG. 6. FIG. 6 is a flowchart for describing a part of a process for manufacturing a hot-rolled steel sheet pertaining to the present embodiment. As shown in FIG. 6, first, in the heating process of step ST10, the slab 1A after it is continuously cast is heated to a predetermined temperature (e.g., about 1300 °C) by the heating furnace 20. After the heating process of step ST10 is executed, the manufacturing process moves to step ST12.

In the scarfing process (removal process) of step ST12, the surface layer of the slab 1A that was heated in step ST10 is scarfed by the scarfing apparatus 30, whereby the target region T including the Cu-rich layer is removed from the slab 1A. After the scarfing process of step ST12 is executed, the manufacturing process moves to step ST14.

It will be noted that if the average concentration of Cu components in the base material of the steel material 1 is less than 0.15 wt%, it is less likely that a Cu-rich layer will be formed in the steel material 1 (the slab 1A), so the surface layer of the steel material 1 (the slab 1A) need not be scarfed by the scarfing apparatus 30. Namely, if the average concentration of Cu components in the base material of the steel material 1 is less than 0.15 wt%, the scarfing process (removal process) of step ST12 need not be performed.

In the descaling process of step ST14, descaling using the cooling water W is performed by the descaling apparatus 40 on the slab 1A from which the target region T was removed in step ST12. Due to the descaling being performed, the surface temperature of the slab 1A drops to less than 1100 °C for example. After the descaling process of step ST14 is executed, the manufacturing process moves to step ST16.

It will be noted that in the present embodiment, a width reducing process is performed after step ST12 (the scarfing process) and before step ST14 (the descaling process). In the width reducing process, the slab 1A that was scarfed in step ST12 is reduced in width by the width reduction apparatus 23, whereby the width of the slab 1A is adjusted.

In the rough rolling process of step ST16, the slab 1A that was descaled in step ST14 is rough rolled by the rough rolling apparatus 50. Because of this, the slab 1A is formed into the rough bar 1B having a predetermined thickness. After the rough rolling process of step ST16 is executed, the manufacturing process moves to step ST18.

In the finish rolling process of step ST18, the rough bar 1B that was obtained in step ST16 is finish rolled by the finish rolling apparatus 60. Because of this, the rough bar 1B is formed into the steel strip 1C having a predetermined thickness. After the finish rolling process of step ST18 is executed, the manufacturing process moves to step ST20.

In the coiling process of step ST20, the steel strip 1C that was finished in step ST18 is coiled by the coiling apparatus 80 and thereby formed into the hot-rolled coil 1D. After the coiling process of step ST20 is executed, a part of the process for manufacturing the hot-rolled steel sheet pertaining to the present embodiment ends.

As described above, in the hot rolling equipment 10 pertaining to the first embodiment, the target region T including the Cu-rich layer formed in the steel material 1 is removed after heating by the heating furnace 20. When the steel material 1 is heated to the predetermined temperature (e.g., 1300 °C) in the heating furnace 20, Cu in a liquid-phase state concentrates at the grain boundaries GB near the surface (surface layer) of the steel material 1. The area (surface layer) of the steel material 1 where Cu has concentrated has poor ductility compared with the base metal part of the steel material 1. For this reason, the occurrence of a Cu-rich layer becomes one of the causes of hot-shortness cracks. In the present embodiment, in the steel material 1 after it is heated by the heating furnace 20, the target region T including the Cu-rich layer is removed from the steel material 1. Consequently, according to the present embodiment, the occurrence of hot-shortness cracks in the steel material 1 is inhibited.

It is conceivable, for example, to remove the Cu-rich layer beforehand from the steel material 1 after it is continuously cast. However, in this case, a Cu-rich layer reforms in the steel material 1 due to the steel material 1 being heated to the predetermined temperature in the heating furnace 20. For this reason, it is difficult to inhibit hot-shortness cracks in the steel material 1. According to the present embodiment, the target region T including the Cu-rich layer is removed from the steel material 1 after heating by the heating furnace 20. Then, in processes following the heating by the heating furnace 20 after the continuous casting in the hot rolling process, the steel material 1 is not heated to a temperature equal to or higher than the temperature at which a Cu-rich layer is formed (e.g., 1100 °C), so reformation of a Cu-rich layer is inhibited. As a result, the occurrence of hot-shortness cracks in the steel material 1 is inhibited.

It will be noted that even if the steel material 1 is heated to 1100 °C or higher in the rough rolling process or the finish rolling process, scale causing a Cu-rich layer would not form on the surface of the steel material 1 because the heating of the steel material 1 associated with rolling is of a short duration of time.

Furthermore, in the hot rolling equipment 10 pertaining to the first embodiment, after the target region T is removed from the steel material 1 by the scarfing apparatus 30, descaling of the steel material 1 is performed by the descaling apparatus 40. In the descaling, the cooling water W is sprayed onto the surface of the steel material 1, whereby the scale S that was formed on the surface is removed. Because of this descaling, the scale S is removed from the surface of the steel material 1 and the temperature at the surface of the steel material 1 is reduced. Because of the reduction in the temperature at the surface of the steel material 1, reformation of a Cu-rich layer is further inhibited. Consequently, according to the present embodiment, the occurrence of hot-shortness cracks in the steel material 1 is inhibited.

Furthermore, in the hot rolling equipment 10 pertaining to the first embodiment, the temperature at the surface of the steel material 1 is cooled to less than 1100 °C by the descaling apparatus 40. Because of the reduction in the temperature at the surface of the steel material 1, reformation of a Cu-rich layer is further inhibited. Consequently, according to the present embodiment, the occurrence of hot-shortness cracks in the steel material 1 is inhibited.

Furthermore, in the hot rolling equipment 10 pertaining to the first embodiment, the steel material 1 is rough rolled by the rough rolling apparatus 50 after the descaling of the steel material 1 by the descaling apparatus 40. The temperature at the surface of the steel material 1 is reduced by rough rolling, whereby reformation of a Cu-rich layer is further inhibited. Consequently, according to the present embodiment, the occurrence of hot-shortness cracks in the steel material 1 is inhibited.

Furthermore, in the hot rolling equipment 10 pertaining to the first embodiment, a region of 2 mm or less from the surface of the steel material 1 in the thickness direction t of the steel material 1 is removed by the scarfing apparatus 30. The Cu-rich layer is mainly formed in a region of 2 mm or less from the surface of the steel material 1 in the thickness direction t of the steel material 1. For that reason, removing a region of 2 mm or less from the surface of the steel material 1 in the thickness direction t of the steel material 1 contributes to removing the Cu-rich layer. Consequently, according to the present embodiment, the occurrence of hot-shortness cracks in the steel material 1 is inhibited.

Furthermore, in the hot rolling equipment 10 pertaining to the first embodiment, the steel material 1 is scarfed by the scarfing apparatus 30, whereby the target region T including the Cu-rich layer is removed from the steel material 1. Removal of the target region T by scarfing results in high productivity compared with removal of the target region T by cutting. Consequently, according to the present embodiment, the productivity of the steel material 1 can be improved.

Moreover, the hot rolling equipment 10 pertaining to the first embodiment is provided separately from the production line of the continuous casting machine 11. Because of this, depending on the production capacities of the continuous casting machine 11 and the hot rolling equipment 10 for example, it becomes possible to hot roll with one line of the hot rolling equipment 10 steel materials 1 that have been continuously cast by two continuous casting machines 11. Furthermore, for example, even if the hot rolling equipment 10 is stopped, the continuous casting of the steel material 1 can be continued without stopping the continuous casting machine 11. Moreover, since the thickness (slab thickness) of the steel material 1 becomes thicker, the removal percentage of the Cu-rich layer relative to the steel material 1 can be relatively reduced.

### (First Example Modification)

In the first embodiment, an example was described where a descaling process is not performed before and after (immediately before and immediately after) the scarfing process (removal process), but the disclosure is not limited to this example. In a first example modification, a pre-removal descaling process is performed before the scarfing process (removal process), and a post-removal descaling process is performed after the scarfing process (removal process).

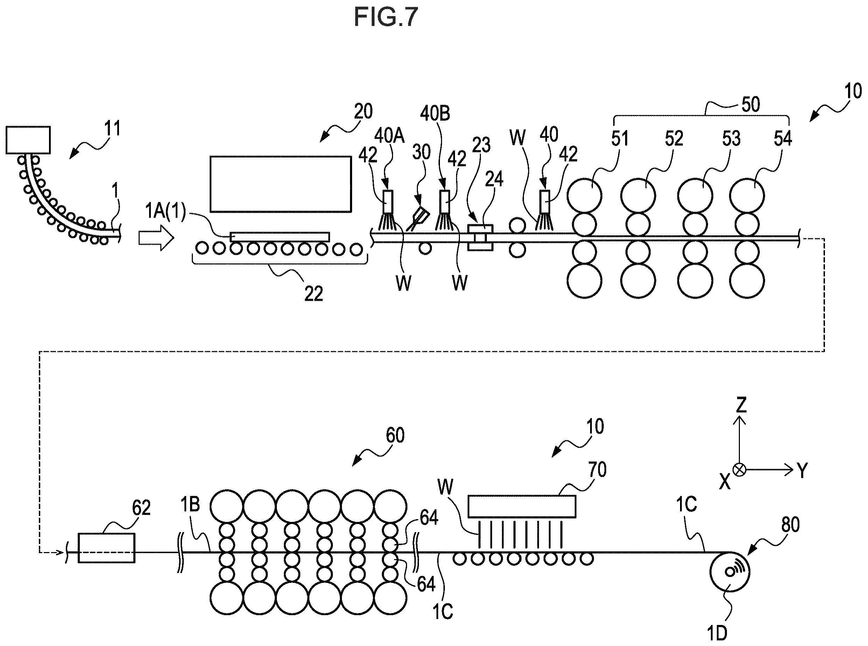

As shown in FIG. 7 as an example, a pre-removal descaling apparatus 40A is provided downstream of the heating furnace 20 and upstream of the scarfing apparatus 30 in the transport direction of the steel material 1. The basic configuration of the pre-removal descaling apparatus 40A is the same as that of the descaling apparatus 40.

The pre-removal descaling apparatus 40A removes scale and the like adhering to the surface of the steel material 1 before (immediately before) the surface of the steel material 1 is scarfed by the scarfing device 30. Namely, in the first example modification, the pre-removal descaling process is performed after the rough rolling process and before the scarfing process.

Here, if scale or the like is adhering to the surface of the steel material 1 when the surface of the steel material 1 is scarfed by the scarfing apparatus 30, the combustion reaction between the scarfing oxygen 37 sprayed from the scarfing apparatus 30 (see FIG. 4) and the steel material 1 may be impeded and the scarfing of the steel material 1 may be interrupted. Particularly when stopping the depth to which the steel material 1 is scarfed by the scarfing apparatus 30 at about 1 mm to 2 mm, the scarfing of the steel material 1 by the scarfing apparatus 30 is likely to be interrupted.

By contrast, in the first example modification, as described above, scale adhering to the surface of the steel material 1 is removed by the pre-removal descaling apparatus 40A before the steel material 1 is scarfed by the scarfing apparatus 30. Because of this, the combustion reaction between the scarfing oxygen 37 sprayed from the scarfing apparatus 30 (see FIG. 4) and the steel material 1 tends to become stable. Consequently, an interruption or the like in the scarfing of the steel material 1 by the scarfing apparatus 30 can be inhibited.

Furthermore, the pre-removal descaling apparatus 40A removes scale adhering to the surface of the steel material 1 by spraying cooling water W onto the surface of the steel material 1. At this time, the surface of the steel material 1 is cooled by the cooling water W, so a Cu-rich layer is further inhibited from reforming on the steel material 1. Moreover, in the fourth example modification, the surface of the steel material 1 is cooled to less than 1100 °C by the pre-removal descaling apparatus 40A. Consequently, a Cu-rich layer is further inhibited from reforming on the steel material 1.

Furthermore, the post-removal descaling apparatus 40B is provided downstream of the scarfing apparatus 30 and upstream of the width reduction apparatus 23 in the transport direction of the steel material 1. The basic configuration of the post-removal descaling apparatus 40B is the same as that of the descaling apparatus 40.

The post-removal descaling apparatus 40B removes scale and the like formed on the surface of the steel material 1 after the steel material 1 has been scarfed by the scarfing device 30. Namely, in the first example modification, the post-removal descaling process is performed after the scarfing process and before the width reducing process.

In this way, because the post-removal descaling apparatus 40B removes scale and the like formed on the surface of the steel material 1, the quality of the width adjustment of the steel material 1 by the width reduction apparatus 23 can be improved.

Furthermore, when the scarfing apparatus 30 scarfs the steel material 1, the temperature at the surface of the steel material 1 rises (e.g., about 50 °C). By contrast, the post-removal descaling apparatus 40B removes scale adhering to the surface of the steel material 1 by spraying cooling water W onto the surface of the steel material 1. At this time, the surface of the steel material 1 is cooled by the cooling water W, so a Cu-rich layer is further inhibited from reforming on the steel material 1. Moreover, in the first example modification, the surface of the steel material 1 is cooled to less than 1100 °C by the post-removal descaling apparatus 40B. Consequently, a Cu-rich layer is further inhibited from reforming on the steel material 1. Consequently, the occurrence of hot-shortness cracks in the steel material 1 is inhibited.

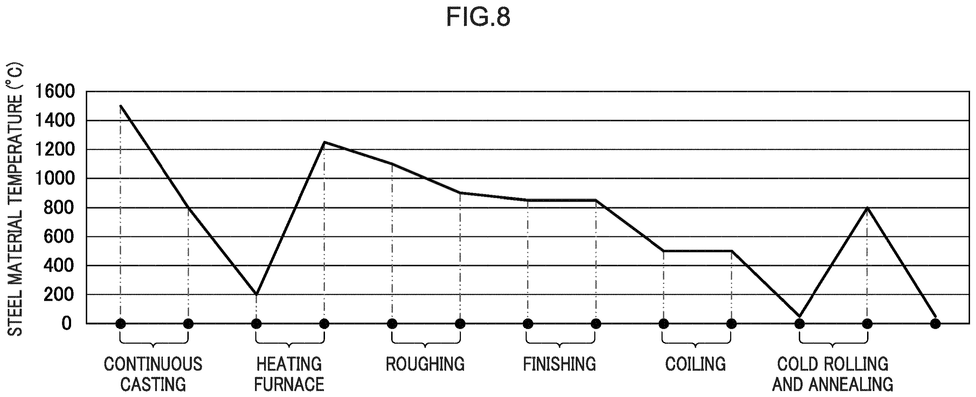

FIG. 8 shows an example of the thermal history of the steel material 1 in a series of processes of continuous casting, hot rolling, and cold rolling in the first example modification. As shown in FIG. 8, at the start of continuous casting, the temperature of the steel material 1 is about 1500 °C. For that reason, scale forms on the surface of the steel material 1. On the other hand, the steel material 1 cools to 1000 °C or lower during the rough rolling process after leaving the heating furnace 20, and from then on its temperature does not rise to 1100 °C or higher. Consequently, in the first example modification, the same effects as those of the first embodiment can be obtained.

It will be noted that in the first example modification the pre-removal descaling process is performed before the scarfing process (removal process) and the post-removal descaling process is performed after the scarfing process (removal process). However, at least one of the pre-removal descaling process and the post-removal descaling process can be omitted.

### (Second Example Modification)

In the first embodiment, an example was described where the scarfing process (removal process) is performed before the width reducing process, but the disclosure is not limited to this example. In a second example modification, the scarfing process (removal process) is performed after the width reducing process and before the rough rolling process. Moreover, in the second example modification, a pre-removal descaling process is performed after the width reducing process and before the scarfing process, and a post-removal descaling process is performed after the scarfing process and before the rough rolling process.

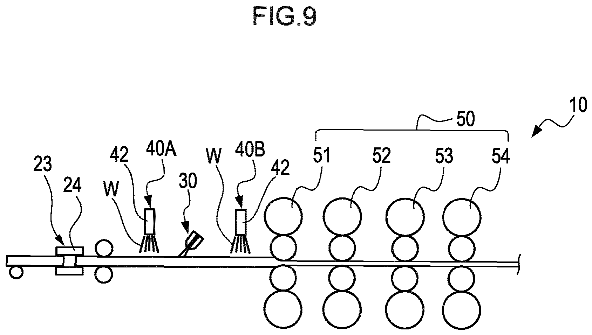

As shown in FIG. 9 as an example, the scarfing apparatus 30 is provided downstream of the width reduction apparatus 23 and upstream of the rough rolling apparatus 50 in the transport direction of the steel material 1. Furthermore, a pre-removal descaling apparatus 40A is provided downstream of the width reduction apparatus 23 and upstream of the scarfing apparatus 30 in the transport direction of the steel material 1. Moreover, a post-removal descaling apparatus 40B is provided downstream of the scarfing apparatus 30 and upstream of the rough rolling apparatus 50 in the transport direction of the steel material 1.

The scarfing apparatus 30 scarfs the surface of the steel material 1 that has been reduced in the width direction by the width reduction apparatus 23. Namely, in the second example modification, the scarfing process is performed after the width reducing process and before the rough rolling process.

Here, when the steel material 1 is reduced in the width direction by the width reduction apparatus 23, hot-shortness cracks caused by a Cu-rich layer may occur in the surfaces (side end faces) of the steel material 1 on both sides in the width direction for example. By contrast, in the second example modification, after the steel material 1 is reduced in the width direction by the width reduction apparatus 23, the surfaces of the steel material 1 on both sides in the thickness direction and the surfaces (side end faces) of the steel material 1 on both sides in the width direction are scarfed by the scarfing apparatus 30. Because of this, hot-shortness cracks formed in the surfaces (side end faces) of the steel material 1 on both sides in the width direction can be removed. Consequently, quality defects in the surface of the steel material 1 can be inhibited.

Furthermore, in the second example modification, the pre-removal descaling process is performed before the scarfing process, and the post-removal descaling process is performed after the scarfing process. Consequently, in the second example modification, the same effects as those of the first example modification can be obtained.

### <Second Embodiment>

In the first embodiment, an example was described where the target region T including the Cu-rich layer is removed from the steel material 1 by the scarfing apparatus 30, but the disclosure is not limited to this example. In a second embodiment, the target region T is removed from the steel material 1 by a cutting apparatus 90 instead of the scarfing apparatus 30. It will be noted that the cutting apparatus 90 is an example of a removal apparatus.

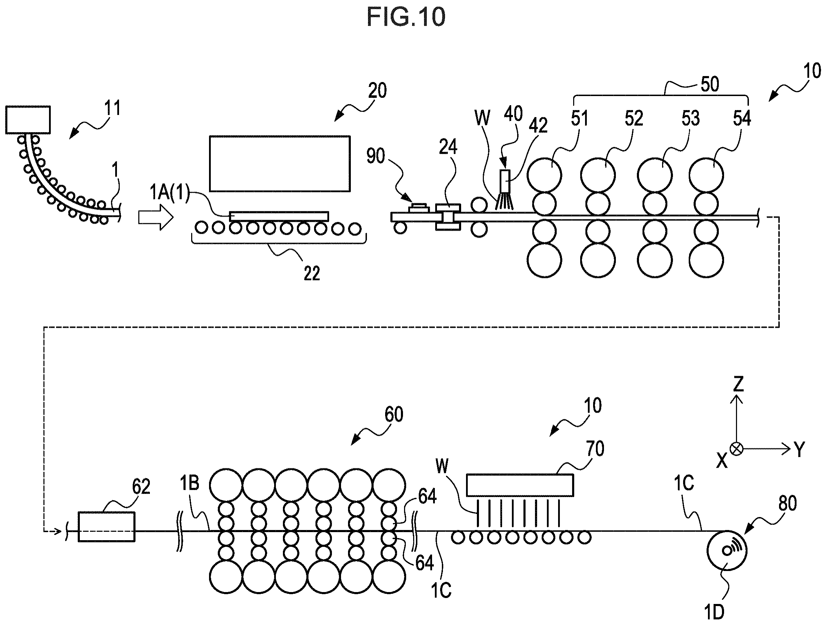

As shown in FIG. 10 as an example, the hot rolling equipment 10 includes the cutting apparatus 90 instead of the scarfing apparatus 30. The cutting apparatus 90 removes the surface part of the slab 1A by cutting the slab 1A discharged from the heating furnace 20. Details about the cutting apparatus 90 will be described further below. The cutting apparatus 90 is located downstream of the heating furnace 20 in the transport direction of the slab 1A. Furthermore, the cutting apparatus 90 is located upstream of the width reduction apparatus 23 and the descaling apparatus 40 in the transport direction of the slab 1A. More specifically, the cutting apparatus 90 is located downstream of the heating furnace 20 and upstream of the width reduction apparatus 23 (the vertical rolls 24) in the transport direction of the slab 1A.

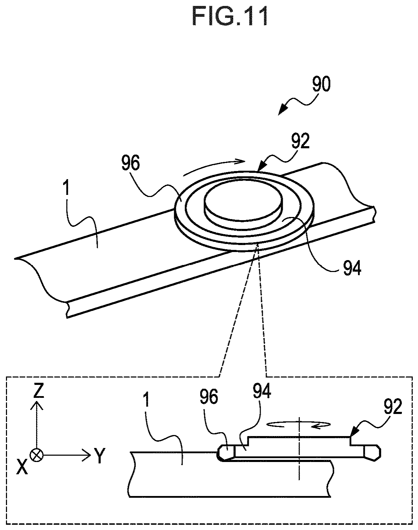

As shown in FIG. 11 as an example, the cutting apparatus 90 includes a rotary cutting tool 92. The rotary cutting tool 92 has a holder 94 and numerous cutting blades 96 attached to the outer peripheral edge portion of the holder 94. The rotary cutting tool 92 receives power from a power source (not shown in the drawings) and rotates. Additionally, the rotating cutting blades 96 come into contact with the surface of the steel material 1, whereby the surface of the steel material 1 is cut. In this way, the surface of the steel material 1 is cut by the cutting apparatus 90, whereby the target region T in the surface of the steel material 1 after it has been heated in the heating furnace 20 is removed.

It will be noted that although an example where the cutting apparatus 90 has the one rotary cutting tool 92 is described here, the disclosure is not limited to this example. For example, one surface of the steel material 1 may be cut by a plurality of the rotary cutting tools 92. Furthermore, the cutting apparatus 90 may include the rotary cutting tools 92 in positions opposing the surfaces of the steel material 1 on both sides in the thickness direction and the surfaces (side end faces) of the steel material 1 on both sides in the width direction.

As described above, in the hot rolling equipment 10 pertaining to the second embodiment, the target region T including the Cu-rich layer is removed from the steel material 1 by the cutting apparatus 90. Mechanical removal such as cutting is less likely to cause a deterioration in the surface texture of the steel material 1 (e.g., surface roughness) compared with removal by scarfing. Consequently, according to the present embodiment, a deterioration in the surface texture of the steel material 1 in the hot rolling process can be inhibited.

It will be noted that although in the second embodiment an example was described where the steel material 1 is cut by the cutting apparatus 90, the disclosure is not limited to this example. The removal apparatus is not limited to the cutting apparatus 90 and may, for example, use a mechanical removal method such as grinding using a grinding wheel apparatus.

### <Third Embodiment>

In the first embodiment, an example was described where the heating furnace 20 is provided separately from the production line of the continuous casting machine 11 that continuously casts the steel material 1, but the disclosure is not limited to this example. In a third embodiment, a heating furnace 102 is provided on a production line of a continuous casting machine that continuously casts the steel material 1.

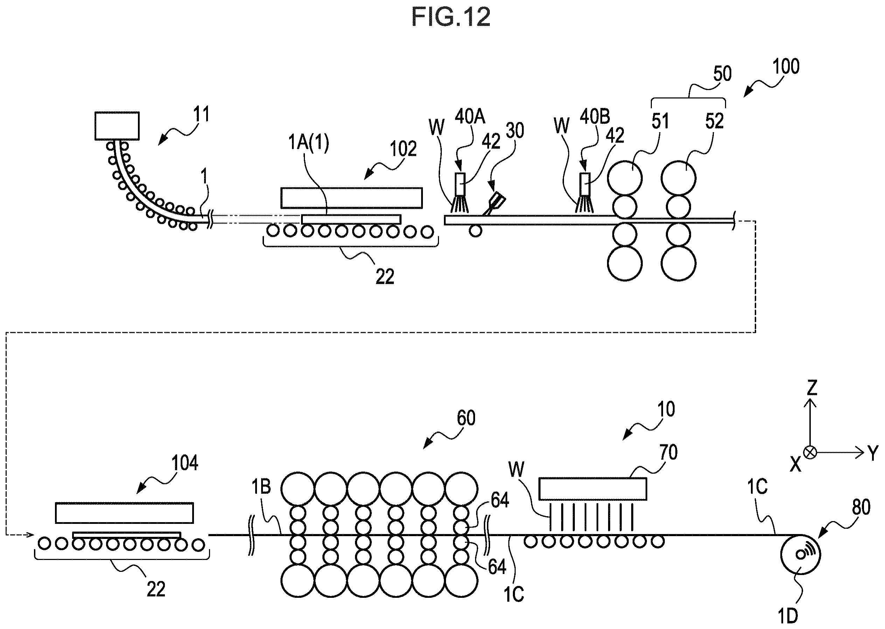

As shown in FIG. 12 as an example, the continuous casting machine 11 continuously casts a slab 1A that is thinner (e.g., 50 mm to 100 mm) than in the continuous casting machine 11 in the first embodiment. Hot rolling equipment 100 is provided on the production line of the continuous casting machine 11. Namely, the production line of the hot rolling equipment 100 is continuous with the production line of the continuous casting machine 11. The hot rolling equipment 100 includes a heating furnace 102, a pre-removal descaling apparatus 40A, a scarfing apparatus 30, a post-removal descaling apparatus 40B, a rough rolling apparatus 50, a rough bar heating furnace 104, and a finish rolling apparatus 60. It will be noted that the hot rolling equipment 100 of the third embodiment does not include the width reduction apparatus 23 of the first embodiment (see FIG. 1). Furthermore, the rough rolling apparatus 50 of the third embodiment has, as an example, two rolling mills 51, 52.

The heating furnace 102 is, for example, a table heating furnace. Furthermore, the heating furnace 102 is provided upstream of the rough rolling apparatus 50 in the transport direction of the steel material 1. The heating furnace 102 heats to a predetermined temperature (1100 °C or higher) the steel material 1 (e.g., the slab 1A), which is obtained by cutting to a predetermined length the steel material 1 discharged from the continuous casting machine 11.

The rough bar heating furnace 104 is, for example, a table heating furnace. Furthermore, the heating furnace 102 is provided downstream of the rough rolling apparatus 50 and upstream of the finish rolling apparatus 60 in the transport direction of the steel material 1. The heating furnace 102 heats to a predetermined temperature (less than 1100 °C) the steel material 1 that has been rough rolled by the rough rolling apparatus 50.

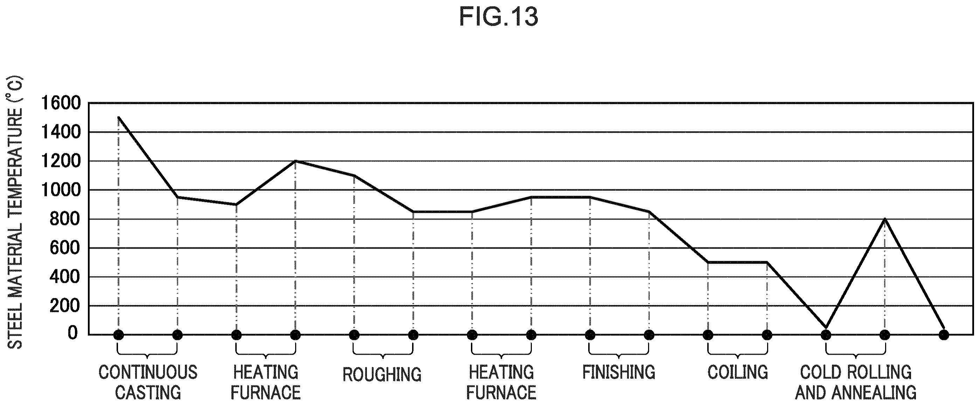

FIG. 13 shows an example of the thermal history of the steel material 1 in a series of processes of continuous casting, hot rolling, and cold rolling in the third embodiment. As shown in FIG. 13, at the start of continuous casting, the temperature of the steel material 1 is about 1500 °C. For that reason, scale forms on the surface of the steel material 1. On the other hand, the steel material 1 cools to 1000 °C or lower during the rough rolling process after leaving the heating furnace 102, and from then on its temperature does not rise to 1100 °C or higher. Consequently, in the third embodiment, the same effects as those of the first embodiment can be obtained.

Moreover, in the third embodiment, the hot rolling equipment 100 is provided on the production line of the continuous casting machine 11. Because of this, there is less heat loss between the continuous casting machine 11 and the hot rolling equipment 100, so energy efficiency can be improved. Furthermore, since the steel material 1 is thin and the rolling load in the hot rolling equipment 100 is smaller, the hot rolling equipment 100 can be downsized.

### (Third Example Modification)

Although in the third embodiment an example was described where the hot rolling equipment 100 includes the rough rolling apparatus 50, the present disclosure is not limited to this example. For example, in a third example modification, hot rolling equipment 110 does not include the rough rolling apparatus 50.

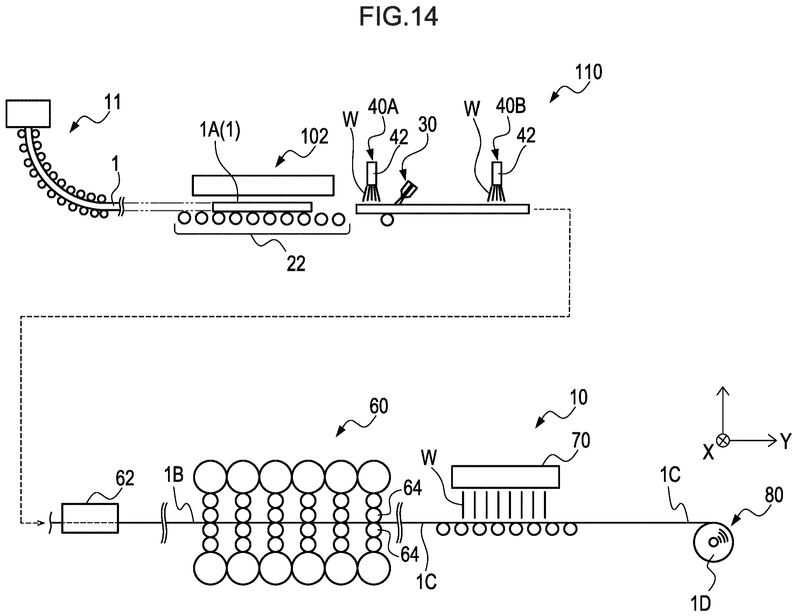

As shown in FIG. 14 as an example, the hot rolling equipment 110 includes a heating furnace 102, a pre-removal descaling apparatus 40A, a scarfing apparatus 30, a post-removal descaling apparatus 40B, a rough bar heating apparatus 62, and a finish rolling apparatus 60, but does not include the rough rolling apparatus 50.

In this way, when the slab 1A that is continuously cast by the continuous casting machine 11 is thin, the rough rolling apparatus 50 may be omitted. Furthermore, although in the third example modification the hot rolling equipment 110 includes the rough bar heating apparatus 62, the hot rolling equipment 110 need not include the rough bar heating apparatus 62.

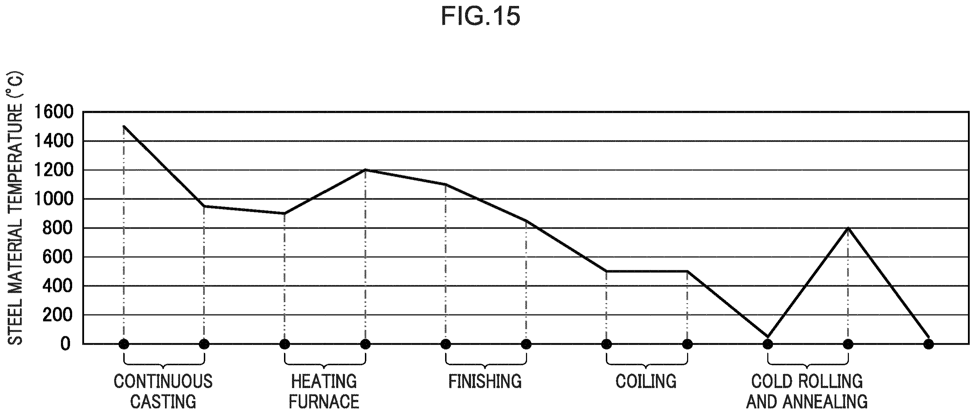

FIG. 15 shows an example of the thermal history of the steel material 1 in a series of processes of continuous casting, hot rolling, and cold rolling in the third example modification. As shown in FIG. 15, at the start of continuous casting, the temperature of the steel material 1 is about 1500 °C. For that reason, scale forms on the surface of the steel material 1. On the other hand, the steel material 1 cools to 1000 °C or lower during the rough rolling process after leaving the heating furnace 102, and from then on its temperature does not rise to 1100 °C or higher. Consequently, in the third embodiment, the same effects as those of the first embodiment can be obtained.

### EXAMPLES

In order to evaluate the performance of the hot rolling equipment 10 and the hot rolling method pertaining to the disclosure, an evaluation of the relationship between the scarfing depth of the steel material 1 and the number of Cu-rich areas in the steel material 1 was conducted.

Specifically, as Example 1, the components of the steel material 1 were adjusted to C: 0.0027 wt%, Si: 0.039 wt%, Mn: 0.2 wt%, P: 0.02 wt%, S: 0.011 wt%, Cu: 0.45 wt%, and Fe for the remainder. In Example 1, three steel materials 1 adjusted in this way were heated for 120 minutes in the heating furnace 20 of the hot rolling equipment 10 to raise the temperature of each steel material 1 to 1250 °C. Then, the surfaces of the three steel materials 1 were scarfed at different scarfing depths. Moreover, the surface of each steel material 1 was descaled, and thereafter each steel material 1 was lowered in temperature to about 1000 °C corresponding to the temperature at the start of rough rolling and then quenched.

The components of the steel materials 1 in Example 2 were the same as those of the steel materials 1 in Example 1, except that the Cu component was set to 0.98 wt%. In Example 2, four steel materials 1 adjusted in this way were heated, scarfed, descaled, and cooled in the same way as in Example 1. It will be noted that the seven steel materials 1 of Example 1 and Example 2 had different scarfing depths. Each steel material 1 of Example 1 and Example 2 manufactured in this way was cut. Then, the cut faces near the surfaces of the steel materials 1 were observed, and the number of grain boundaries where Cu concentration was noted out of the grain boundaries reaching the surface of the steel materials 1 was measured in a range of 1 cm in the sheet passing direction (transport direction) or the width direction of the steel material 1.

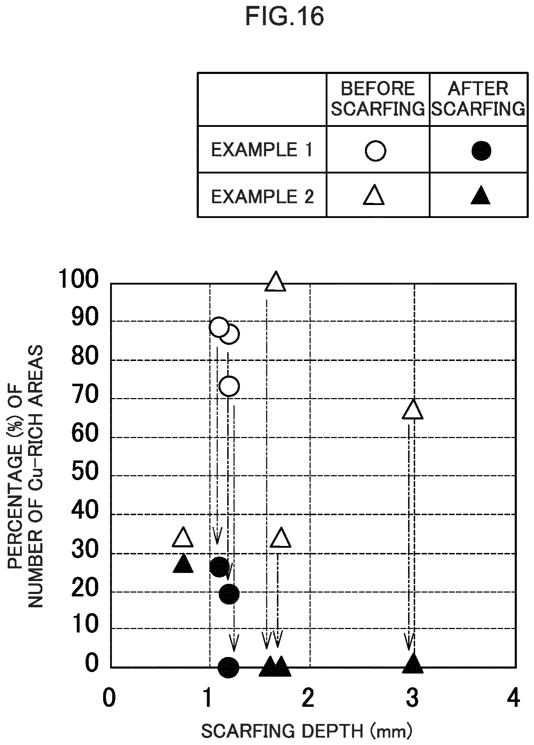

FIG. 16 shows the results of measuring the number of Cu-rich areas in each of the steel materials 1 of Example 1 and Example 2. It will be noted that the vertical axis in FIG. 16 (the percentage of the number of Cu-rich areas) indicates the percentage of the measurement results for each steel material 1 relative to a maximum value (100%) of the measurement results (the number of Cu-rich areas) for each steel material 1. As shown in FIG. 16 as an example, in Example 1, the percentage of the number of Cu-rich areas in each steel material 1 was greatly reduced after scarfing each steel material 1. For example, in Example 1, the percentage of the number of Cu-rich areas in each steel material 1 was 70 to 90% before each scarfing steel material 1 (before scarfing) but decreased to 30% or lower after scarfing each steel material 1 at a scarfing depth of about 1 mm (after scarfing).

In Example 2, as in Example 1, the percentage of the number of Cu-rich areas decreased after each steel material 1 was scarfed. For example, in the case of the steel material 1 that was scarfed at a scarfing depth of about 3 mm, the percentage of the number of Cu-rich areas was about 70% before scarfing the steel material 1 but decreased to 0% after scarfing the steel material 1. Furthermore, in the case of the two steel materials 1 that were scarfed at a scarfing depth of about 1.5 mm, the percentage of the number Cu-rich areas in each steel material 1 was about 100% or 35% before scarfing each steel material 1 but decreased to 0% after scarfing each steel material 1. Furthermore, in the case of the steel material 1 that was scarfed at a scarfing depth of about 0.75 mm, the percentage of the number of Cu-rich areas in the steel material 1 was about 35% before scarfing but decreased to about 25% after scarfing. By scarfing the steel materials 1 in this way, it was confirmed that the Cu-rich areas were reduced.

While preferred embodiments of the disclosure have been described in detail above with reference to the attached drawings, the present disclosure is not limited to these embodiments. It will be apparent that a variety of example changes or example applications within the category of the technical thought set forth in the claims may occur to a person of ordinary skill in the technical field to which the disclosure belongs, and it will be understood that these also naturally belong to the technical scope of the disclosure.

Furthermore, the disclosure of Japanese Patent Application No. 2023-054364 filed on March 29, 2023, is incorporated by reference herein in its entirety.

All documents, patent applications, and technical standards mentioned in this specification are incorporated herein by reference to the same extent as if each individual document, patent application, or technical standard were specifically and individually indicated to be incorporated by reference.

In addition to the above embodiments, the following addenda are also disclosed.

### (Addendum 1)

A hot rolling method for hot rolling a steel material containing Cu, the hot rolling method comprising:
a heating process that heats the steel material to a predetermined temperature after continuously casting; and
a removal process that performs a treatment on the steel material that has been heated in the heating process, the treatment removing a target region including a Cu-rich layer that is present at a surface side of the steel material and in which a concentration of Cu components is higher than it is in a base material.

### (Addendum 2)

The hot rolling method of addendum 1, further comprising a descaling process that descales the steel material using cooling water after the removal process.

### (Addendum 3)

The hot rolling method of addendum 2, wherein in the descaling process, the temperature at the surface of the steel material is cooled to 1100 °C or lower.

### (Addendum 4)

The hot rolling method of addendum 2 or addendum 3, further comprising a rough rolling process that performs rough rolling on the steel material, wherein the rough rolling process is performed after the descaling process.

### (Addendum 5)

The hot rolling method of any one of addendum 1 to addendum 4, wherein the target region is a region of 2 mm or less from the surface of the steel material in a thickness direction of the steel material.

### (Addendum 6)

The hot rolling method of any one of addendum 1 to addendum 5, wherein, in the removal process, the target region is removed by scarfing.

### (Addendum 7)

The hot rolling method of any one of addendum 1 to addendum 5, wherein, in the removal process, the target region is removed by mechanical removal.

## Claims

1. Hot rolling equipment for hot rolling a steel material containing Cu, the hot rolling equipment comprising:
a heating furnace that heats the steel material to a predetermined temperature after casting;
a rolling apparatus that rolls the steel material that has been heated in the heating furnace;
a removal apparatus that is provided downstream of the heating furnace and upstream of the rolling apparatus in a transport direction of the steel material and that removes, from the steel material that has been heated in the heating furnace, a target region including a Cu-rich layer that is present at a surface side of the steel material and in which a concentration of Cu components is higher than a concentration of Cu components in a base material of the steel material; and
a post-removal descaling apparatus that is provided downstream of the removal apparatus and upstream of the rolling apparatus in the transport direction of the steel material and that descales the steel material using cooling water.

2. The hot rolling equipment of claim 1, wherein the post-removal descaling apparatus cools the steel material such that a temperature at a surface of the steel material becomes less than 1100°C.

3. The hot rolling equipment of claim 1 or claim 2, wherein the hot rolling equipment includes a width reduction apparatus that is provided downstream of the heating furnace and upstream of the removal apparatus in the transport direction of the steel material and that reduces the steel material in a width direction of the steel material.

4. The hot rolling equipment of any one of claim 1 to claim 3, wherein the hot rolling equipment includes a pre-removal descaling apparatus that is provided downstream of the heating furnace and upstream of the removal apparatus in the transport direction of the steel material and that descales the steel material using cooling water.

5. The hot rolling equipment of any one of claim 1 to claim 4, wherein the rolling apparatus is a rough rolling apparatus that rough rolls the steel material or a finish rolling apparatus that finish rolls the steel material.

6. The hot rolling equipment of any one of claim 1 to claim 5, wherein the target region is a region of 2 mm or less from a surface of the steel material in a thickness direction of the steel material.

7. The hot rolling equipment of any one of claim 1 to claim 6, wherein the removal apparatus removes the target region from the steel material by scarfing or removes the target region from the steel material by mechanical removal.

8. The hot rolling equipment of any one of claim 1 to claim 7, wherein the heating furnace is provided separately from a production line of a casting machine that casts the steel material.

9. The hot rolling equipment of any one of claim 1 to claim 7, wherein the heating furnace is provided on a production line of a casting machine that casts the steel material.

10. A hot rolling method for hot rolling a steel material containing Cu, the hot rolling method comprising:
a heating process that heats the steel material to a predetermined temperature after casting;
a removal process that performs a treatment on the steel material that has been heated in the heating process, the treatment removing a target region including a Cu-rich layer that is present at a surface side of the steel material and in which a concentration of Cu components is higher than a concentration of Cu components in a base material of the steel material;
a post-removal descaling process that descales the steel material using cooling water after the removal process; and
a rolling process that rolls the steel material after the post-removal descaling process.

11. The hot rolling method of claim 10, wherein, in the post-removal descaling process, the steel material is cooled such that a temperature at a surface of the steel material becomes less than 1100 °C.

12. The hot rolling method of claim 10 or claim 11, further comprising a width reducing process that reduces the steel material in a width direction of the steel material after the heating process and before the removal process.

13. The hot rolling method of any one of claim 10 to claim 12, further comprising a pre-removal descaling process that descales the steel material using cooling water after the heating process and before the removal process.

14. The hot rolling method of any one of claim 10 to claim 13, wherein, in the rolling process, rough rolling or finish rolling is performed on the steel material.

15. The hot rolling method of any one of claim 10 to claim 14, wherein the target region is a region of 2 mm or less from a surface of the steel material in a thickness direction of the steel material.

16. The hot rolling method of any one of claim 10 to claim 15, wherein, in the removal process, the target region is removed from the steel material by scarfing and the target region is removed from the steel material by mechanical removal.

17. The hot rolling method of any one of claim 10 to claim 16, wherein the steel material contains the Cu at 0.15 mass% or more.
